(19) Europäisches Patentamt
European Patent Office
Office européen des brevets

(11) **EP 3 865 920 A1**

(12) **EUROPEAN PATENT APPLICATION**

(43) Date of publication:
**18.08.2021 Bulletin 2021/33**

(51) Int Cl.:
*G02B 6/036* (2006.01)     *G02B 6/028* (2006.01)

(21) Application number: **21156967.8**

(22) Date of filing: **12.02.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.02.2020 IN 202011006078**

(71) Applicant: **Sterlite Technologies Limited
Haryana 122002 (IN)**

(72) Inventors:
- **PANDEY, Anand Kumar**
  **122002 Gurgaon (IN)**
- **MUNIGE, Srinivas**
  **122002 Gurgaon (IN)**
- **MALVIYA, Apeksha**
  **122002 Gurgaon (IN)**

(74) Representative: **Hepworth Browne
15 St. Pauls Street
Leeds LS1 2JG (GB)**

(54) **OPTICAL FIBRE HAVING CENTERLINE CORE PROFILE**

(57)     An optical fibre (100) includes a glass core defined by a central core region (102) surrounded by an outer core region (104). The glass core has a core thickness of 3.5 to 6 micrometers. The central core region (102) has a centerline dip (114). The central dip has a centerline width in range of about 0 to 3 micrometers. The outer core region (104) has a core alpha in a range of 3 - 8. The optical fibre (100) includes a buffer clad region (106), a trench region (108) and an outer cladding region (110). The outer cladding region (110) has at least one of an outer cladding thickness in range of 41.5 to 46.5 micrometers and an outer cladding relative refractive index near zero.

EP 3 865 920 A1

**Description**

CROSS-REFERENCE TO RELATED APPLICATIONS

The present application is based on, and claims priority from an Indian Application Number 202011006078 filed on 12/02/2020 , the disclosure of which is hereby incorporated by reference herein.

BACKGROUND OF THE INVENTION

Field of the Invention.

The present disclosure relates to the field of optical fibre transmission. More particularly, the present disclosure relates to a bend insensitive optical fibre.

Description of Prior Art

With the advancement of science and technology, various modern technologies are being employed for communication purposes. One of the most important modern communication technologies is optical fibre communication technology using a variety of optical fibres. Optical fibre is used to transmit information as light pulses from one end to another. One such type of optical fibre is a single mode optical fibre. The single mode optical fibre is used in FTTx and long haul communication. The telecommunication industry is continuously striving for designs to achieve high data rate capacity and low losses. The ongoing research suggests that the single mode optical fibre of G657 and G652D category are used for FTTx and long-haul applications. The single mode optical fibre of G652D and G657 categories faces major challenges in FTTx and long haul communication respectively. G652D fibres faces major challenges in FTTx application due to good macro bend losses and G657 category fibres face major challenges in long haul applications due to high nonlinear effects as a result of low mode field diameter (MFD). Also, the low MFD in G657A2 in long haul communication results in a power penalty more than 1.5 decibel as compared to G652D.

The significantly matured G652.D category fibres have already taken millions of kms in current FTTX infrastructure. The one advantage that G652D has, is its ultra-splicing capabilities but average macro-bending characteristics. To address the need to enhance the macro-bending, the G657A2 and G657A1 optical fibres have been developed and evolved. The replacement of G652.D fibres with G657.A2 or G657 A1 can be a solution however, G657.A2 or G657 A1 has their own issues when it comes to splicing capabilities. There is always a need to develop an optical fibre that exhibits the property of both G657A2 and G657D so as to achieve flexible splicing capability as well as good macro bend performance. i.e. easy splicing of G.657.A2/A1 with G.652.D. It is usually noticed that there is a persisting problem of using G.657.A2 fibres, because of OTDR artifacts that occur when splicing them to standard single mode fibres i.e. G.652D.

There always seems to be a need to develop an optical fibre which would have an optimize design with good macro-bend characteristics, as well as is also compliant to current network installed G.652.D. For example, G657A2 has a mode field diameter in the range as same as mode field diameter as that of G.652.D.

In light of the above stated discussion, there is a need for a single mode optical fibre that overcomes the above sited drawbacks to use for FTTx as well as long haul and access networks.

SUMMARY OF THE INVENTION

In an aspect, the present disclosure provides an optical fibre. The optical fibre includes a glass core defined by a central core region surrounded by an outer core region. The central core region has a centerline dip having a centerline width in range of 0 to 3 micrometers. The optical fibre has a macro-bend loss up to 0.10 decibel per turn corresponding to wavelength of 1550 nanometer at bending radius of 7.5 millimeter. In addition, the optical fibre has the macro-bend loss up to 0.22 decibel per turn corresponding to wavelength of 1625 nanometer at bending radius of 7.5 millimeter.

A primary object of the present disclosure is to provide an optical fibre.

The centerline dip may have a centerline relative refractive index in range of 0 to 0.35.

The optical fibre may have one or more of a mode field diameter. In addition, the mode field diameter is in range of 8.7 microns to 9.7 microns at a wavelength of 1310 nanometers and attenuation of less than or equal to 0.18 dB/km at a wavelength of 1550 nanometers.

The outer core region may have an outer core width in the range from 2.7 to 4.6 and maximum refractive index is in the range of 0.3 to 0.4, and central core region may have a thickness 0 to 3 micrometers.

The glass core may have a core thickness of 3.5 to 6 micrometers.

The outer core region may have a core parameter alpha $\alpha$ in a range of 3 - 8.

The optical fibre may include a buffer clad region between the outer core region and a trench region. The buffer clad region may have at least one of a buffer thickness and buffer relative refractive index. The buffer thickness is in range of 3 micrometers to 8.5 micrometers. Buffer relative refractive index is in a range of -0.01 to + 0.01. In addition, the optical fibre may include the trench region and an outer cladding region. The trench region lies between the buffer clad region and the outer cladding region. The trench region may have at least one of a trench thickness in range of 6 micrometers to 8 micrometers and a trench relative refractive index in range of -0.2 to -0.4. Further, the outer cladding region may have at least one of an outer cladding thickness in range of 41.5 to 46.5 micrometers and an outer cladding relative refractive index near zero.

The optical fibre splices with standard single mode fibre such that the optical fibre may have full compatibility with a G652.D category installed optical fibres and G657.A1 category optical fibre.

BRIEF DESCRIPTION OF DRAWING

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:

FIG. 1 illustrates a cross sectional view of an optical fibre with a central core region and an outer core region;

FIG. 2 illustrates the cross sectional view of the optical fibre with a buffer clad region, a trench region and an outer cladding region; and

FIG. 3 illustrates a refractive index profile of the optical fibre.

It should be noted that the accompanying figures are intended to present illustrations of few exemplary embodiments of the present disclosure. These figures are not intended to limit the scope of the present disclosure. It should also be noted that accompanying figures are not necessarily drawn to scale.

REFERENCE NUMERALS IN THE DRAWINGS

For a more complete understanding of the present invention parts, reference is now made to the following descriptions:

100. The optical fibre.
102. The central core region.
104. The outer core region.
106. The buffer clad region.
108. The trench region.
110. The outer cladding region.
112. The central longitudinal axis.
114. The centerline dip.
$\Delta 1$. The first relative refractive index.
$\Delta 4$. The outer cladding relative refractive index.
$\Delta c$. The centerline relative refractive index.
r1. The first radius.
r2. The second radius.
r3. The third radius.

r4. The fourth radius.
rc. The centerline width radius.

DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

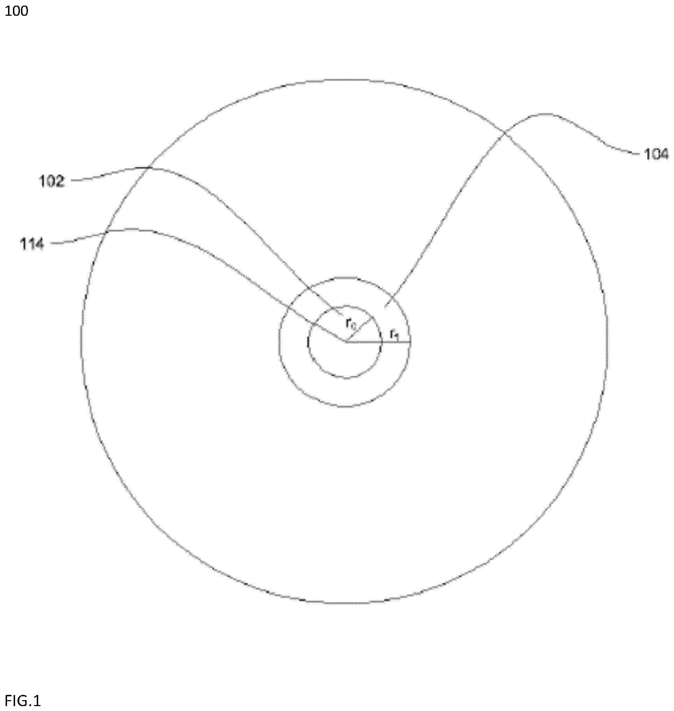

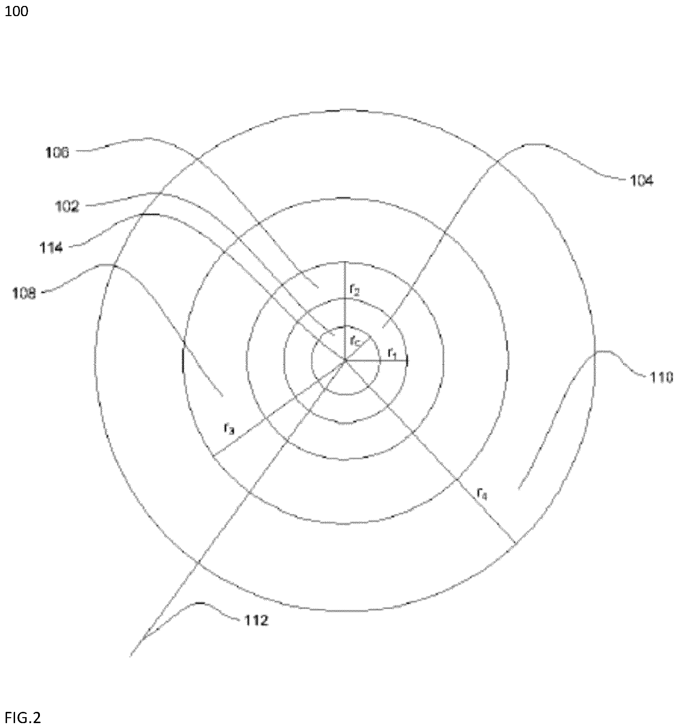

According to FIG. 1 and FIG. 2, this is a cross-sectional view of an optical fibre 100. In general, optical fibre is a thin strand of glass or plastic capable of transmitting optical signals. The optical fibre 100 is configured to transmit information over long distances with low non-linear effects as compared to G657A2 and a good macro-bend performance.

The optical fibre 100 includes a glass core defined by a central core region 102 surrounded by an outer core region 104. In addition, the optical fibre 100 may include a buffer clad region 106, a trench region 108 and an outer cladding region 110. In general, core is an inner part of an optical fibre and cladding is an outer part of the optical fibre. The glass core has a core thickness of about 3.5 micrometers to 6 micrometers. In addition, the core thickness of the glass core may vary. The central core region 102 has a centerline dip 114 having a centerline width. Further, the centerline width is in range of 0 to 3 micrometers. Furthermore, the centerline width may vary. Moreover, the central core region 102 has thickness 0 to 3 micrometers. Also, thickness of the central core region 102 may vary. Also, the central core region 102 is defined along a central longitudinal axis 112 of the optical fibre 100. The central longitudinal axis 112 is an imaginary axis.

Further, the central core region 102, the outer core region 104, the buffer clad region 106, the trench region 108 and the outer cladding region 110 of the optical fibre 100 are associated with a relative refractive index profile. In general, the relative refractive index profile is maintained as per required level based on concentration of chemicals used for manufacturing of an optical fibre. In addition, the chemicals used for manufacturing of the optical fibre include one or more materials and one or more dopants. Further, the one or more materials such as, but not limited to, silica, fluorozirconate, fluoroaluminate, chalcogenide, crystalline materials and the one or more dopants such as, but not limited to, germanium dioxide ($GeO_2$), aluminium oxide ($Al_2O_3$), fluorine or boron trioxide ($B_2O_3$) are deposited over surface of initial material with facilitation of flame hydrolysis. Furthermore, the initial material is a substrate rod or a tube.

In addition, the relative refractive index profile determines relationship between a relative refractive index of the optical fibre 100 and a radius of the optical fibre 100. Further, the radius of the optical fibre 100 corresponds to centerline width radius $r_c$, a first radius $r_1$, a second radius $r_2$, a third radius $r_3$ and a fourth radius $r_4$. Furthermore, manufacturing of the optical fibre 100 is carried out after manufacturing of a preform. Moreover, the refractive index profile of the optical fibre 100 is determined during manufacturing of the preform of the optical fibre 100.

In addition, the central core region 102 has the centerline dip 114. The central dip has a centerline relative refractive index $\Delta_c$. The outer core region 104 of the optical fibre 100 has a first relative refractive index $\Delta_1$.

Further, the outer core region 104 has maximum refractive index $n_{max}$. Furthermore, the outer core region 104 has a core parameter $\alpha$ (alpha). Moreover, the central core region 102 of the optical fibre 100 has the centerline width radius $r_c$. Also, the outer core region 104 of the optical fibre 100 has the first radius $r_1$. Also, the centerline width radius $r_c$ is greater than 0 micron and less than 1.5 microns. Also, the first radius $r_1$ is in range of about 3.5 microns to 6 microns. Also, range of the first radius $r_1$ of the outer core region 104 may vary. Also, the centerline dip 114 may have the centerline relative refractive index $\Delta_c$ in range of about 0 to 0.35. Also, range of the centerline relative refractive index $\Delta_c$ of the centerline dip 114 may vary. The outer core region 104 may have the first relative refractive index $\Delta_1$ in range of about 0.30 to 0.40. In addition, range of the first relative refractive index $\Delta_1$ may vary. Further, maximum refractive index of the outer core region 104 is in range of 0.3 to 0.4. Furthermore, the core parameter alpha $\alpha$ of the outer core region 104 is in a range of about 3 - 8. Moreover, range of the core parameter alpha $\alpha$ may vary. Also, the outer core region 104 may have an outer core width in range of about 2.7 to 4.6 micrometers. Also, the outer core width of the outer core region 104 may vary.

The expression used for calculating the relative refractive index is produced below:

$$\Delta i = 100 \times (n_i^2 - n_{clad}^2 / n_i^2)$$

wherein, $n_{clad}$: refractive index of the pure silica;
$n_i$: refractive index of the $i_{th}$ layer;
$\Delta_i$: the relative refractive index of $i_{th}$ layer.

In addition, the refractive index profile changes between the second radius $r_2$ and the fourth radius $r_4$ of the optical fibre 100. Further, the relative refractive index of the central core region 102, the outer core region 104, the outer cladding region 110, the buffer clad region 106 and the trench region 108 has a pre-defined value. Furthermore, the radius of the central core region 102, the outer core region 104, the outer cladding region 110, the buffer clad region 106 and the trench region 108 has a pre-defined value. Moreover, the pre-defined values of the relative refractive index are set to obtain good macro-bend performance and reduce non-linear effects as compared to G657A2.

In addition, the buffer clad region 106 may be defined by the first radius $r_1$ and the second radius $r_2$ from the central longitudinal axis 112 of the optical fibre 100. Further, the buffer clad region 106 is present between the outer core region and the trench region 108. The buffer clad region 106 may have a buffer relative refractive index. In addition, the buffer relative refractive index corresponds to a second relative refractive index $\Delta_2$. The second refractive index (a second relative refractive index $\Delta_2$) of the buffer clad region 106 is in range of about -0.01 to + 0.01. Further, buffer relative refractive index of the buffer clad region 106 may vary. The buffer clad region 106 may have a buffer thickness in range of 3 micrometers to 8.5 micrometers. The buffer thickness of the buffer clad region 106 may vary. Further, the trench region 108 is defined by the second radius $r_2$ and the third radius $r_3$ from the central longitudinal axis 112 of the optical fibre 100. Furthermore, the trench region 108 is present between the buffer clad region 106 and the outer cladding region 110. The trench region 108 may have a trench thickness in range of 6 micrometers to 8 micrometers. The trench region 108 may have a third relative refractive index $\Delta_3$. The third relative refractive index $\Delta_3$ of the trench region 108 corresponds to a trench relative refractive index. The trench relative refractive index is in range of -0.2 to -0.4. The trench thickness and the trench relative refractive index may vary. Moreover, the outer cladding region 110 is defined by the third radius $r_3$ and the fourth radius $r_4$. Also, the outer cladding region 110 may have a fourth relative refractive index of $\Delta_4$. The fourth relative refractive index of $\Delta_4$ of the outer cladding region corresponds to an outer cladding relative refractive index. The outer cladding relative refractive index is near zero. The outer cladding region may have an outer cladding thickness in range of 41.5 to 46.5 micrometers. The outer cladding thickness and the outer cladding relative refractive index may vary.

In addition, the buffer clad region 106 of the optical fibre 100 may have the second radius $r_2$ in range of about 7 microns to 12 microns. Further, range of the second radius $r_2$ may vary. Furthermore, the buffer clad region 106 of the optical fibre 100 may have the buffer relative refractive index is in range of about -0.01 to 0.01. Moreover, the buffer relative refractive index of the buffer clad region 106 of the optical fibre 100 may vary.

In addition, the trench region 108 of the optical fibre 100 may have the third radius $r_3$ in range of about 15 to 25 microns. Further, range of the third radius $r_3$ may vary. Furthermore, the trench region 108 of the optical fibre 100 may have the trench relative refractive index is in range of about -0.2 to -0.4. Moreover, range of the trench relative refractive index may vary.

In addition, the outer cladding region 110 of the optical fibre 100 may have the fourth radius $r_4$ is in range of about 62.1 to 62.8 micron. Further, value of the fourth radius $r_4$ may vary. Furthermore, the outer cladding region 110 may have the outer cladding relative refractive index is near zero or zero. Moreover, the outer cladding relative refractive index $\Delta_4$ of the outer cladding region 110 of the optical fibre 100 may vary.

In addition, the outer core region 104 of the optical fibre 100 has maximum refractive index $n_{max}$. In addition, the buffer clad region 106 has buffer refractive index of pure silica $n_{clad}$. Further, minimum refractive index of the trench region 108 is $n_{trench}$. Furthermore, expressions used to determine refractive index is given by below:

$$(r) = nmax\,[1 - 2\Delta_1\,(r/R1)]^{0.5}$$

for $r \leq r1$

$$n(r) = nclad$$

for $r1 \leq r \leq r2$ and $r \geq r3$

The refractive index profile of the optical fibre 100 low non-linear effects as compared to G657A2 and good macro-bend performance. In addition, the optical fibre 100 has large mode field diameter and large effective area.

In addition, the optical fibre 100 may have the mode field diameter of about 9.08 microns at wavelength of 1310 nanometer. Further, the optical fibre 100 may have the mode field diameter in range of about 8.7 micron to 9.7 micron at wavelength of 1310 nanometer. Furthermore, range of the mode field diameter of the optical fibre 100 may vary. In general, mode field diameter defines a section or area of optical fibre in which the optical signals travel. The outer cladding region 110 of the optical fibre 100 may have a diameter in range of about 124.2 micron to 125.6 micron. In addition, the diameter of the outer cladding region 110 of the optical fibre 100 may vary.

In addition, the optical fibre 100 may have a cable cut off wavelength of up to 1260 nanometer. Further, the cable cut off wavelength of the optical fibre 100 may vary. Furthermore, the optical fibre 100 may have a zero dispersion wavelength in range of about 1304 nanometer to 1309 nanometer. Moreover, range of the zero dispersion wavelength of the optical fibre 100 may vary.

The optical fibre 100 may have a dispersion of up to 18 picosecond/(nanometer-kilometer). The dispersion of the optical fibre 100 may vary.

Further, the optical fibre 100 may have a core clad concentricity error of up to 0.5. The core clad concentricity error may vary. Furthermore, the optical fibre 100 may have a cladding non-circularity percentage up to 0.7 percent. The cladding non-circularity percentage may vary. Moreover, the optical fibre 100 may have a zero dispersion slope of up to 0.092 picosecond per (nanometer²kilometer). The zero dispersion slope of the optical fibre 100 may vary.

The optical fibre 100 may have a prof testing of at least 100 kpsi. In addition, the optical fibre 100 may have a coating strip force in range of 3 to 5 Newton. The coating strip force of the optical fibre 100 may vary. Further, the optical fibre 100 may have a fibre curl of at least 4 meters. The fibre curl of the optical fibre 100 may vary. In addition, the optical fibre 100 may have coating cladding concentricity error of up to 12 micrometers. Further, coating cladding concentricity error of the optical fibre 100 may vary. Furthermore, the optical fibre 100 is compliant with G657.A2 bend-insensitive fibre that splices seamlessly with standard single mode fibres. Moreover, the optical fibre 100 that is compliant with G657.A2 bend insensitive fibre, may have an optimized design with the same mode field diameter as standard G.652.D fibres to ensure full compatibility with a G.652.D installed optical fibre base. Also, the optical fibre 100 may enable next-level cable designs and bend performance, while streamlining field optical time domain reflectometer (OTDR) testing protocols. Also, the optical fibre 100 may have extreme bend performance of G.657A2 category optical fibre with the splicing convenience of G.657.A1 design. Also, the optical fibre 100 may have bend insensitive property that assists in conserving optical power in closures and other locations where bending losses may quickly add up. Bend insensitivity property of the optical fibre 100 improves optical power margins.

The optical fibre 100 may have macro-bend loss in complaint to the ITUT G657.A2. In addition, the optical fibre 100 may have an outer diameter post the application of a primary coating and a secondary coating. In an example, the optical fibre 100 may have the outer diameter of about 250 microns post the application of the primary coating and the secondary coating. In another example, the outer diameter is about 200 microns post the application of the primary coating and the secondary coating. In yet another example, the outer diameter is about 180 microns post the application of the primary coating and the secondary coating. In yet another example, the outer diameter is about 160 microns post the application of the primary coating and the secondary coating. In another example, the outer diameter of the optical fibre may vary. In general, bending loss is a loss that occurs when optical fibre is bent. In addition, bending loss includes macro-bend loss and a micro-bend loss. Moreover, the optical fibre 100 may have at least one macro-bend loss up to 0.10 decibel per turn corresponding to wavelength of 1550 nanometer at bending radius of 7.5 millimeter, macro-bend loss up to 0.22 decibel per turn corresponding to wavelength of 1625 nanometer at bending radius of 7.5 millimeter, macro-bend loss up to 0.1 decibel per turn corresponding to wavelength of 1550 nanometer at bending radius of 10 millimeter, macro-bend loss up to 0.2 decibel per turn corresponding to wavelength of 1625 nanometer at bending radius of 10 millimeter, macro-bend loss up to 0.03 decibel per turn corresponding to wavelength of 1550 nanometer at bending radius of 15 millimeter and macro bend loss up to 0.1 decibel per turn corresponding to wavelength of 1625 nanometer at bending radius of 15 millimeter. Also, the attenuation of the optical fibre 100 is less than or equal to 0.19 dB/km. More preferably, the optical fibre 100 may have the attenuation of less than or equal to 0.18 dB/km. In general, bending radius is a minimum radius of the inner curvature formed on bending optical fibre.

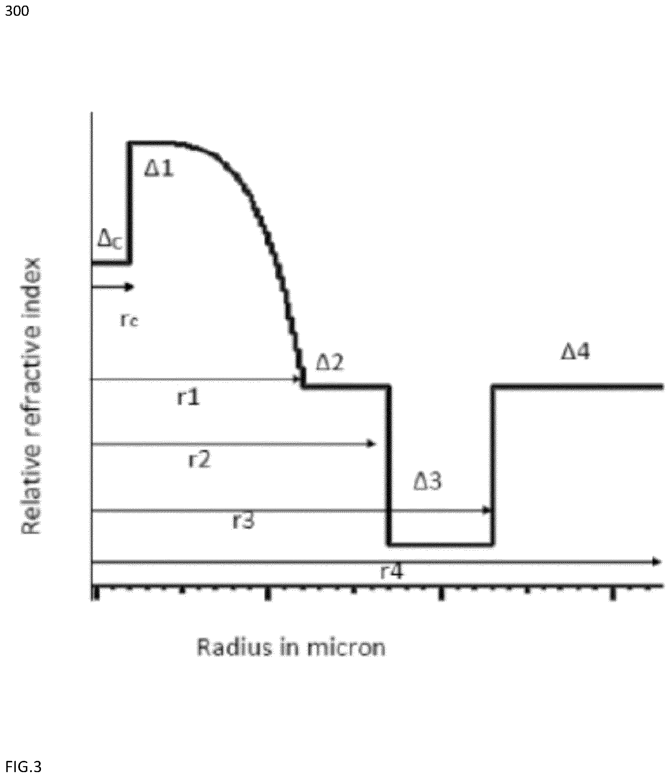

According to FIG. 3, this is a refractive index profile 300 of the optical fibre 100. The refractive index profile 300 illustrates relationship between the refractive index of the optical fibre 100 and the radius of the optical fibre 100 (as shown in FIG. 1 and FIG. 2). In addition, the refractive index profile 300 shows change in the relative refractive index of the central core region 102, the outer core region 104, the buffer clad region 106, the trench region 108 and the outer cladding region 110 with the radius of the optical fibre 100. Further, the refractive index profile 300 shows the centerline dip 114 associated with central core region 102 (as shown in FIG. 1 and FIG. 2)

In addition, the optical fibre 100 may have the mode field diameter. In an example, the mode field diameter is about 9.05 micron at wavelength of 1310 nanometer. In another example, the mode field diameter is about 9.14 micron at wavelength of 1310 nanometer. Further, the optical fibre 100 may have the zero dispersion wavelength. In an example, the zero dispersion wavelength is about 1308 nanometer. In another example, the zero dispersion wavelength is about 1300 nanometer. In yet another example, the zero dispersion wavelength is about 1313 nanometer. In yet another example, the zero dispersion wavelength is about 1317 nanometer. Furthermore, the optical fibre 100 may have the dispersion. In an example, the dispersion is about 15 picosecond/(nanometer-kilometer) at wavelength of 1550 nanometer. In another example, the dispersion is about 17.3 picosecond/(nanometer-kilometer) at wavelength of 1550 nanometer. In yet another example, the dispersion is about 15 picosecond/(nanometer-kilometer) at wavelength of 1550 nanometer. In yet another example, the dispersion is about 17 picosecond/(nanometer-kilometer) at wavelength of 1550 nanometer.

Moreover, the optical fibre 100 may have the cable cut off wavelength. In an example, the cable cutoff wavelength is about 1220 nanometer. In another example, the cable cutoff wavelength is about 1230 nanometer. In yet another example, the cable cutoff wavelength is about 1240 nanometer. In yet another example, the cable cutoff wavelength is about 1255 nanometer. Also, the optical fibre 100 is associated with macro-bend loss. In an example, macro-bend loss of the optical fibre 100 is about 0.047 decibel per turn corresponding to wavelength of 1550 nanometer at bending radius of 7.5 millimeter. In another example, macro-bend loss of the optical fibre 100 is about 0.121 decibel per turn corresponding to wavelength of 1550 nanometer at bending radius of 7.5 millimeter. In yet another example, macro-bend loss of the optical fibre 100 is about 0.168 decibel per turn corresponding to wavelength of 1550 nanometer at bending radius of 7.5 millimeter. In yet another example, macro-bend loss of the optical fibre 100 is about 0.25 decibel per turn corresponding to wavelength of 1550 nanometer at bending radius of 7.5 millimeter.

In an example, macro-bend loss of the optical fibre 100 is about 0.107 decibel per turn corresponding to wavelength of 1625 nanometer at 30 bending radius of 7.5 millimeter. In another example, macro-bend loss of the optical fibre 100 is about 0.26 decibel per turn corresponding to wavelength of 1625 nanometer at bending radius of 7.5 millimeter. In yet another example, macro-bend loss of the optical fibre 100 is about 0.53 decibel per turn corresponding to wavelength of 1625 nanometer at bending radius of 7.5 millimeter. In yet another example, macro-bend loss of the optical fibre 100 is about 0.363 decibel per turn corresponding to wavelength of 1625 nanometer at bending radius of 7.5 millimeter.

In an example, macro-bend loss of the optical fibre 100 is about 0.013 decibel per turn corresponding to wavelength of 1550 nanometer at bending radius of 10 millimeters. In another example, macro-bend loss of the optical fibre 100 is about 0.031 decibel per turn corresponding to wavelength of 1550 nanometer at bending radius of 10 millimeters. In yet another example, macro-bend loss of the optical fibre 100 is about 0.047 decibel per turn corresponding to wavelength of 1550 nanometer at bending radius of 10 millimeters. In yet another example, macro-bend loss of the optical fibre 100 is about 0.035 decibel per turn corresponding to wavelength of 1550 nanometer at bending radius of 10 millimeters.

In an example, macro-bend loss of the optical fibre 100 is about 0.035 decibel per turn corresponding to wavelength of 1625 nanometer at bending radius of 10 millimeters. In another example, macro-bend loss of the optical fibre 100 is about 0.086 decibel per turn corresponding to wavelength of 1625 nanometer at bending radius of 10 millimeters. In yet another example, macro-bend loss of the optical fibre 100 is about 0.139 decibel per turn corresponding to wavelength of 1625 nanometer at bending radius of 10 millimeters. In yet another example, macro-bend loss of the optical fibre 100 is about 0.103 decibel per turn corresponding to wavelength of 1625 nanometer at bending radius of 10 millimeters.

In an example, macro-bend loss of the optical fibre 100 is about 0.007 decibel per 10 turn corresponding to wavelength of 1550 nanometer at bending radius of 15 millimeters. In another example, macro-bend loss of the optical fibre 100 is about 0.015 decibel per 10 turn corresponding to wavelength of 1550 nanometer at bending radius of 15 millimeters. In yet another example, macro-bend loss of the optical fibre 100 is about 0.016 5 decibels per 10 turn corresponding to wavelength of 1550 nanometer at bending radius of 15 millimeters. In yet another example, macro-bend loss of the optical fibre 100 is about 0.013 decibel per 10 turn corresponding to wavelength of 1550 nanometer at bending radius of 15 millimeters. 10

In an example, macro-bend loss of the optical fibre 100 is about 0.034 decibel per 10 turn corresponding to wavelength of 1625 nanometer at bending radius of 15 millimeters. In another example, macro-bend loss of the optical fibre 100 is about 0.069 decibel per 10 turn corresponding to wavelength of 1625 nanometer at bending radius of 15 millimeters. In yet another example, macro-bend loss of the optical fibre 100 is about 0.076 decibel per 10 turn corresponding to wavelength of 1625 nanometer at bending radius of 15 millimeters. In yet another example, macro-bend loss of the optical fibre 100 is about 0.062 decibel per 10 turn corresponding to wavelength of 1625 nanometer at bending radius of 15 millimeters.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Although the present disclosure has been explained in relation to its preferred embodiment(s) as mentioned above, it is to be understood that many other possible modifications and variations can be made without departing from the spirit and scope of the inventive aspects of the present invention. It is, therefore, contemplated that the appended claim or claims will cover such modifications and variations that fall within the true scope of the invention.

**Claims**

1. An optical fibre (100) comprising:

   a glass core defined by a central core region (102) surrounded by an outer core region (104), wherein the central core region (102) has a centerline dip (114) having a centerline width greater than 0 and less than 3 micrometers; wherein the optical fibre (100) has a macro-bend loss up to 0.5 decibel per turn corresponding to a wavelength of 1550 nanometer at a bending radius of 7.5 millimeter; and wherein the optical fibre (100) has a macro-bend loss up to 1 decibel per turn corresponding to a wavelength of 1625 nanometer at a bending radius of 7.5 millimeter.

2. An optical fibre (100) as claimed in claim 1, wherein the centerline dip (114) has a centerline relative refractive index ($\Delta_c$) in range of 0 to 0.35.

3. The optical fibre (100) as claimed in claim 1 or claim 2, wherein the optical fibre (100) has one or more of a mode field diameter, wherein the mode field diameter is in range of 8.7 microns to 9.7 microns at a wavelength of 1310 nanometer at a wavelength of 1310 nanometers and attenuation of less than or equal to 0.18 dB/km.

4. An optical fibre (100) as claimed in any preceding claim, wherein the outer core region (104) has an outer core width in the range from 2.7 to 4.6 and maximum relative refractive index is in the range of 0.3 to 0.4, and central core region (102) has thickness greater than 0 and less than 3 micrometers.

5. The optical fibre (100) as claimed in any preceding claim, wherein the glass core has a core thickness of 3.5 to 6 micrometers.

6. The optical fibre (100) as claimed in any preceding claim, wherein the outer core region (104) has a core parameter alpha $\alpha$ in a range of 3 - 8.

7. The optical fibre (100) as claimed in any preceding claim further comprising at least one of:

> a buffer clad region (106) between the outer core region (104) and a trench region (108), wherein the buffer clad region (106) has at least one of a buffer thickness and buffer relative refractive index, wherein the buffer thickness is in a range of 3 micrometers to 8.5 micrometers, wherein buffer relative refractive index is in range of - 0.01 to + 0.01;
> a trench region (108) between the buffer clad region (106) and the outer cladding region (110), wherein the trench region (108) has at least one of a trench thickness in range of 6 micrometers to 8 micrometers and a trench relative refractive index in range of -0.2 to -0.4; and
> an outer cladding region (110) having at least one of an outer cladding thickness in range of 41.5 to 46.5 micrometers and an outer cladding relative refractive index near zero.

8. The optical fibre (100) as claimed in any preceding claim, wherein the optical fibre (100) splices with standard single mode fibre such that the optical fibre (100) has full compatibility with a G652.D category installed optical fibres and G657.A1 category optical fibre.

100

FIG.1

100

FIG.2

300

FIG.3

Europäisches
Patentamt

European
Patent Office

Office européen
des brevets

# EUROPEAN SEARCH REPORT

Application Number

EP 21 15 6967

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/384026 A1 (BICKHAM SCOTT ROBERTSON [US] ET AL) 19 December 2019 (2019-12-19) * paragraphs [0005], [0059] - [0071]; figure 4B; table 1C * | 1-8 | INV. G02B6/036 ADD. G02B6/028 |
| X | US 2017/075061 A1 (BOOKBINDER DANA CRAIG [US] ET AL) 16 March 2017 (2017-03-16) * paragraph [0006] - paragraph [0010]; figure 5; table 1 * | 1-8 | |
| X | EP 2 369 379 A1 (DRAKA COMTEQ BV [NL]) 28 September 2011 (2011-09-28) * paragraph [0017] - paragraph [0019]; tables 1,2 * * paragraphs [0044] - [0046], [0050]; figure * * * paragraph [0099] - paragraph [0103]; tables 7,9 * | 1-8 | |
| A | US 2008/056654 A1 (BICKHAM SCOTT ROBERTSON [US] ET AL) 6 March 2008 (2008-03-06) * paragraph [0055]; figures 2,3 * | 1-8 | TECHNICAL FIELDS SEARCHED (IPC) G02B |
| X,P | EP 3 754 392 A1 (STERLITE TECH LTD [IN]) 23 December 2020 (2020-12-23) * paragraph [0002] - paragraph [0015]; figure 2 * * paragraph [0032] - paragraph [0048] * * paragraph [0055] * | 1-8 | |

The present search report has been drawn up for all claims

| Place of search | Date of completion of the search | Examiner |
|---|---|---|
| The Hague | 24 June 2021 | Bourhis, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 21 15 6967

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2021

| Patent document cited in search report | Publication date | Patent family member(s) | Publication date |
|---|---|---|---|
| US 2019384026 A1 | 19-12-2019 | EP 3807684 A1<br>US 2019384026 A1<br>WO 2019240987 A1 | 21-04-2021<br>19-12-2019<br>19-12-2019 |
| US 2017075061 A1 | 16-03-2017 | CN 108055866 A<br>EP 3350633 A1<br>JP 2018533079 A<br>US 2017075061 A1<br>US 2018024291 A1<br>US 2018335565 A1<br>WO 2017048827 A1 | 18-05-2018<br>25-07-2018<br>08-11-2018<br>16-03-2017<br>25-01-2018<br>22-11-2018<br>23-03-2017 |
| EP 2369379 A1 | 28-09-2011 | CN 102193141 A<br>DK 2369379 T3<br>EP 2369379 A1<br>ES 2539824 T3<br>US 2011229101 A1 | 21-09-2011<br>08-06-2015<br>28-09-2011<br>06-07-2015<br>22-09-2011 |
| US 2008056654 A1 | 06-03-2008 | EP 2057494 A2<br>JP 5638805 B2<br>JP 2010503019 A<br>KR 20090049612 A<br>US 2008056654 A1<br>US 2010046899 A1<br>WO 2008027351 A2 | 13-05-2009<br>10-12-2014<br>28-01-2010<br>18-05-2009<br>06-03-2008<br>25-02-2010<br>06-03-2008 |
| EP 3754392 A1 | 23-12-2020 | CN 112099132 A<br>EP 3754392 A1<br>US 2021033780 A1 | 18-12-2020<br>23-12-2020<br>04-02-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202011006078